# DEMANDE DE BREVET EUROPEEN

(11) **EP 4 302 962 A1**
(43) Date de publication de la demande: **10.01.2024**
(21) Numéro de dépôt: 22183206.6
(22) Date de dépôt: 05.07.2022
(51) Int. Cl.: B29C 49/24, B29C 48/00, B29C 48/152, B29K 23/00, B29L 31/00, B29K 105/26, B29L 23/20, B29L 31/60, B32B 1/08, B32B 3/02, B32B 27/08, B65D 35/08, G09F 3/00, B32B 3/30, B32B 27/32, B65D 23/08, B65D 25/20, B29C 63/06, B29C 65/78, B29C 65/00

(54) **STRUCTURE MULTICOUCHE DE TUBE PLASTIQUE**

(71) Demandeur: Aisapack Holding SA, 1896 Vouvry (CH)
(72) Inventeur: THOMASSET, Jacques, 74500 Neuvecelle (FR); DEMAUREX, Gilles, 1920 Martigny (CH); CASANOVA, Rémy, 74500 EVIAN-LES-BAINS (FR)
(74) Mandataire: Grosfillier, Philippe

(57) **Abrégé**

L'invention concerne un corps tubulaire (1) obtenu par un procédé d'extrusion et d'étiquetage comprenant les étapes successives suivantes:
(a) formation d'une étiquette (3) partiellement ou totalement tubulaire à partir d'un film composé majoritairement d'une résine,
(b) introduction de l'étiquette (3) dans un élément de calibration,
(c) extrusion d'une couche (2) du côté de la face concave de l'étiquette (3), ladite couche étant composée majoritairement d'une résine, la résine de la couche extrudée (2) et la résine de l'étiquette (3) étant de même nature,
(d) mise en contact de la couche (2) avec la face concave de l'étiquette (3), l'étape (c) étant réalisée dans l'élément de calibration.

## Description

### Domaine de l'invention

L'invention se situe dans le domaine des emballages tubulaires et notamment celui des tubes flexibles pour produits liquides ou visqueux. Elle concerne plus précisément des tubes flexibles étiquetés aptes au recyclage et fabriqués par le procédé d'extrusion étiquetage décrit dans les publications WO2015/159234A1, WO2018/051235A1 et WO2018/203210A1, le contenu de ces publications et notamment les procédés décrits dans celles-ci étant incorporés par référence en leur entier dans la présente demande.

### Etat de la technique

Les corps tubulaires confectionnés par extrusion étiquetage sont utilisés pour confectionner des emballages sans soudure étiquetés tels que des tubes flexibles pour produits liquides ou visqueux ou tels que des cartouches pour colles ou mastics. Ces emballages ainsi que leur procédé de fabrication par extrusion étiquetage sont décrits dans les publications mentionnées ci-dessus.

La publication WO2015/159234A1 décrit le procédé et dispositif de fabrication de ces emballages par extrusion étiquetage ainsi que les emballages obtenus.

La publication WO2018/051235A1 décrit un procédé de fabrication dans lequel l'étiquette comprend au moins deux couches dont l'une a une température de fusion qui est d'au moins 20°C supérieure à la température de fusion du corps tubulaire extrudé.

La publication WO2018/203210A1 décrit une jupe flexible obtenu par extrusion étiquetage présentant un comportement élastique, c'est-à-dire qui recouvre sa forme initiale après déformation. Cette jupe présente une étiquette dont le module en traction est supérieur à 3500 N/mm2 et une couche extrudée dont le module en traction est inférieur à 1200 N/mm2.

Les publications de l'art antérieur, et notamment celles mentionnées ci-dessus n'enseignent pas comment confectionner par extrusion étiquetage un emballage recyclable. L'art antérieur n'enseigne pas en particulier comment réaliser un corps tubulaire par extrusion étiquetage avec une étiquette et un corps extrudé qui sont formés avec des résines de la même famille pour permettre leur recyclage. Par exemple dans la publication WO2015/159234, si plusieurs matières sont mentionnées pour la partie extrudée et l'étiquette, dans ses réalisations concrètes, l'étiquette comprend au moins une couche dont la température de fusion est supérieure à 160°C et au moins une couche de même nature que le corps tubulaire extrudé. Plus précisément, dans les exemples, pour un corps tubulaire en polyéthylène (PE), on utilise une étiquette en PET/PE, PE/PET/PE, PA/PE, Alu/PE, PE/Alu/PE, Papier/PET/PE. Toutes ces structures ne peuvent pas être recyclées facilement en raison du mélange de matières utilisées pour les confectionner. Dans la publication WO2018/051235, on trouve la même problématique de mélange de matières avec les mêmes combinaisons rendant le recyclage difficile à réaliser et nécessitant une séparation préalable des couches.

Un problème identique se pose dans la publication WO2018/203210 qui décrit des mélanges de matières différentes pour la couche principale.

Dès lors, il existe un besoin de développer des procédés et moyens permettant d'obtenir des emballages qui puissent être majoritairement ou entièrement recyclés en fin de vie de façon simple et sans traitement préalable de l'emballage avant son recyclage, par exemple pour en séparer les couches ou les composants (corps, étiquette, épaule, bouchon etc.).

### Exposé général de l'invention

L'invention permet de remédier aux inconvénients précités en offrant un corps tubulaire confectionné par extrusion étiquetage et facilement recyclable. Le corps tubulaire selon l'invention est produit dans un mode d'exécution au moyen des procédés décrits dans les publications identifiées ci-dessus dont le contenu est incorporé par référence dans la présente demande. Par exemple, dans des modes d'exécution de l'invention, on utilise le procédé de WO2015/159234A1 dans lequel le corps tubulaire est obtenu par un procédé d'extrusion et d'étiquetage comprenant les étapes successives suivantes:
(a) formation d'une étiquette partiellement ou totalement tubulaire à partir d'un film composé majoritairement de résine recyclable,
(b) introduction de l'étiquette dans un élément de calibration,
(c) extrusion d'une couche du côté de la face concave de l'étiquette,
(d) mise en contact de la couche avec la face concave de l'étiquette, l'étape (c) étant réalisée dans l'élément de calibration.

Cette publication est incorporée par référence en son entier ce qui concerne le procédé décrit dans celle-ci.

De manière générale, l'invention peut être utilisée pour augmenter la productivité car la matière fondue et extrudée n'est plus en contact direct avec la surface de l'élément de calibration. Les frottements de la matière fondue et extrudée sur l'élément de calibration que l'on retrouve dans un procédé classique d'extrusion sont supprimés si bien que la vitesse de production peut être augmentée.

Les emballages résultants de ce procédé de fabrication offrent une très forte cohésion entre l'étiquette et le corps tubulaire. Les risques de décollement de l'étiquette lors de l'usage de l'emballage sont écartés contrairement à des emballages de l'art antérieur que l'on produit avec une étiquette adhésive qui est appliquée postérieurement sur un corps extrudé.

L'invention permet en outre de réaliser des tubes décorés de faible ou grand diamètre. Elle offre une très grande flexibilité, et peut faire l'objet de nouvelles installations ou permettre la modification et l'adaptation d'installations d'extrusion existantes.

L'invention, son principe et des modes d'exécution de celle-ci sont définis dans les revendications qui suivent la présente description.

Selon des modes d'exécution de l'invention, l'étiquette et la matière extrudée formant le corps tubulaire, sont composées majoritairement de résines de même nature afin de permettre le recyclage de l'emballage en fin de vie.

Selon des modes d'exécution de l'invention, le corps tubulaire est majoritairement à base de résines de même nature permettant le recyclage ; le taux de résine de même nature dans le corps tubulaire étiqueté étant supérieur à 70%, préférentiellement supérieur à 85% et avantageusement supérieur à 95%.

Dans des modes d'exécution, le corps tubulaire est majoritairement à base de polyéthylène ; le taux de polyéthylène dans le corps tubulaire étiqueté étant supérieur à 70%, préférentiellement supérieur à 85% et avantageusement supérieur à 95%.

Dans des modes d'exécution, le corps tubulaire est majoritairement à base de HDPE, le taux de HDPE dans le corps tubulaire étiqueté étant supérieur à 70%, préférentiellement supérieur à 85% et avantageusement supérieur à 95%.

Selon des modes d'exécution, lorsque le corps tubulaire est recyclé dans la filière des flacons en HDPE, le corps tubulaire 1 est composé majoritairement de HDPE dont l'indice de fluidité, c'est-à-dire le MFR (190°C, 2,16kg, mesuré selon la norme ISO 1133) est inférieur à 4 et de préférence inférieur à 1.

Dans des modes d'exécution, le corps tubulaire est majoritairement à base de polypropylène ; le taux de polypropylène dans le corps tubulaire étiqueté étant supérieur à 70%, préférentiellement supérieur à 85% et avantageusement supérieur à 95%.

Dans des modes d'exécution, le corps tubulaire est confectionné au moins en partie à partir de résines recyclées. Le corps tubulaire peut contenir une ou plusieurs couches de résines recyclées. Pour des raisons de compatibilité alimentaire, il est généralement recommandé d'éviter que les couches recyclées forment la couche interne de l'emballage et se trouvent en contact avec le produit emballé.

Dans des modes d'exécution, le corps tubulaire étiqueté est confectionné à partir de polyéthylène recyclé, le taux de polyéthylène recyclé étant supérieur à 30%, préférentiellement supérieur à 50% et avantageusement supérieur à 70%.

Dans des modes d'exécution, le corps tubulaire est confectionné à partir de polypropylène recyclé, le taux de polypropylène recyclé étant supérieur à 30%, préférentiellement supérieur à 50% et avantageusement supérieur à 70%.

Selon l'invention, dans des modes d'exécution, la surface externe du corps tubulaire étiqueté présente un coefficient de friction sur l'inox inférieur à 0.25, et de préférence inférieur à 0,2 et avantageusement inférieur à 0,17 (norme ISO 8295).

Selon l'invention, dans des modes d'exécution, le corps tubulaire présente avantageusement une variation d'épaisseur au niveau de la surface interne et située à l'aplomb de l'extrémité de l'étiquette, ladite variation d'épaisseur formant un bourrelet ou un creux.

Dans des modes d'exécution, la variation d'épaisseur forme un bourrelet ; l'épaisseur du bourrelet étant comprise entre 1% et 30% de l'épaisseur totale et de préférence entre 5% et 20% de l'épaisseur totale.

Selon l'invention, bourrelet permet d'améliorer la résistance circonférentielle du corps tubulaire au niveau de la discontinuité créée par les extrémités de l'étiquette.

Dans des modes d'exécution, la variation d'épaisseur forme un creux ; la profondeur du creux étant comprise entre 1% et 30% de l'épaisseur totale et de préférence entre 5% et 20% de l'épaisseur totale.

Selon l'invention, le creux permet de diminuer la résistance circonférentielle du corps tubulaire au niveau des extrémités de l'étiquette pour faciliter l'ouverture du corps tubulaire en fin de vie.

Selon l'invention, dans des modes d'exécution, la largeur du bourrelet ou du creux est comprise entre 0,5 mm et 10 mm et de préférence entre 1 et 5 mm.

Dans des modes d'exécution, , les extrémités de l'étiquette sont disposées bout à bout et sont séparées d'un espacement compris entre 0 et 2mm, préférentiellement entre 0 et 500 microns, et avantageusement entre 0 et 100 microns.

Dans des modes d'exécution, les extrémités de l'étiquette se chevauchent et forment un recouvrement compris entre 0 et 2mm, préférentiellement entre 0 et 500 microns, et avantageusement entre 0 et 100 microns.

Dans des modes d'exécution, une bande située entre l'étiquette et la résine extrudée relie les extrémités de l'étiquette ; la largeur de ladite bande étant comprise entre 2 et 10mm, et préférentiellement entre 3 et 7mm.

Dans des modes d'exécution, une bande située sur la surface externe du corps tubulaire relie les extrémités de l'étiquette ; la largeur de ladite bande étant comprise entre 2 et 10mm, et préférentiellement entre 3 et 7mm.

Selon l'invention, dans des modes d'exécution, le corps tubulaire comporte avantageusement une couche barrière à l'oxygène ou/et aux arômes et ou aux substances pouvant migrer dans l'emballage.

Le corps tubulaire selon l'invention présente une grande résistance au stress cracking, ainsi qu'une barrière élevée à la vapeur d'eau ou à l'oxygène.

Dans des modes d'exécution, la couche extrudée est avantageusement formée d'une résine ou d'un mélange de résine particulièrement résistante au stress cracking. Le MFR (190°C, 2,16kg, mesuré selon la norme ISO 1133) de la résine ou du mélange de résine formant la couche est inférieur à 50 et de préférence inférieur à 25 et avantageusement inférieur à 4.

Dans des modes d'exécution, l'épaisseur du corps tubulaire est de préférence comprise entre 150 et 1500 microns et en particulier entre 200 et 1200 microns.

Dans des modes d'exécution, l'épaisseur de l'étiquette est comprise entre 10 et 120 microns et de préférence entre 20 et 80 microns. D'autres dimensions sont bien entendu possibles. De préférence, l'étiquette 3 recouvre toute la surface du corps tubulaire.

Le corps tubulaire selon l'invention présente avantageusement une excellente barrière à la vapeur d'eau ainsi qu'à l'oxygène. La barrière à la vapeur d'eau du corps tubulaire est inférieure à 0.1 et de préférence à 0,05 g/tube/jour/100%H2O. Le corps tubulaire présente également une perméabilité à l'oxygène inférieure à 6 cm3/tube/jour/bar et de préférence inférieure à 0.75. Avantageusement la barrière à l'oxygène est apportée par l'étiquette. De nombreuses solutions existent pour apporter des propriétés barrière à l'oxygène. L'étiquette peut contenir par exemple une couche bi-orientée ou métallisée ou avec un revêtement SiOx. D'autres couches barrière comme des couches d'EVOH, PA, largement utilisées dans le domaine de l'emballage peuvent être utilisées également, pour autant que ces couches du fait de leur nature ou de leur proportion n'altèrent pas la recyclabilité du corps tubulaire.

Dans des modes d'exécution, le corps tubulaire étiqueté comporte au moins une couche barrière située dans l'étiquette ; l'épaisseur de ladite couche barrière représentant moins de 10% de l'épaisseur totale, préférentiellement moins de 5%, et avantageusement moins de 1%.

Dans des modes d'exécution, le corps tubulaire étiqueté comporte au moins une couche barrière située dans la couche extrudée. Selon l'invention l'épaisseur de la couche barrière représente moins de 10% de l'épaisseur totale, préférentiellement moins de 5%, et avantageusement moins de 2%.

Dans des modes d'exécution, la couche barrière peut être une couche de résine EVOH ou une couche métallisée ou une couche Siox.

L'invention offre plusieurs avantages en ce qui concerne l'apparence du corps tubulaire et par conséquent l'apparence de l'emballage. Par exemple, il est possible de produire une surface de corps tubulaire brillante ou mate en modifiant le choix de l'étiquette et en particulier de la couche de vernis en surface de l'étiquette.

L'invention permet d'obtenir une décoration complète du corps tubulaire. Selon des modes d'exécution de l'invention, l'étiquette s'étend autour de l'ensemble du corps tubulaire dans la direction radiale. Il est possible d'appliquer l'étiquette de sorte qu'elle entoure complètement le corps tubulaire dans la direction circonférentielle sans laisser d'espace entre les bords de l'étiquette. Il est ainsi possible de produire un motif continu ou un texte ininterrompu qui s'étend sur la circonférence autour du corps du corps tubulaire, sans une jointure visible entre les bords de l'étiquette décorée.

Il peut également être avantageux que la décoration de l'étiquette couvre l'ensemble du corps tubulaire dans la direction axiale.

Dans des modes d'exécution, l'invention concerne un produit comprenant au moins un corps tubulaire tel que définie dans la présente demande. Le produit peut être un tube ou un flacon ou une cartouche ou un autre emballage, ou un autre objet.

### Définition des termes utilisés dans l'exposé de l'invention

Dans l'exposé de l'invention les termes et abréviations suivants sont utilisés :
- Etiquette : film de faible épaisseur comportant une ou plusieurs couches et formant la surface externe du corps tubulaire. La face externe de l'étiquette est généralement imprimée et vernie.
- PP : polypropylène
- HDPE : polyéthylène haute densité
- EVOH : éthylène alcool vinylique
- Bourrelet : sur-épaisseur locale de la paroi du corps tubulaire située à l'aplomb des extrémités de l'étiquette
- Creux : sous-épaisseur locale de la paroi du corps tubulaire située à l'aplomb des extrémités de l'étiquette
- Bande : film de faible épaisseur reliant les extrémités de l'étiquette

### Description détaillée de l'invention

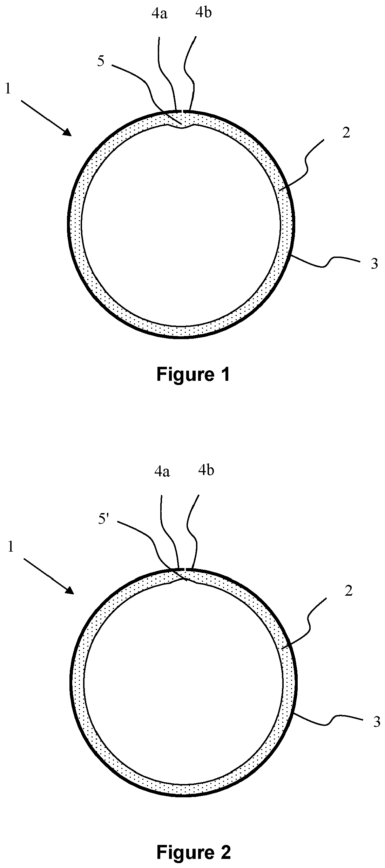

L'invention sera mieux comprise par la description de modes d'exécution nonlimitatifs de celle-ci et des figures annexées dans lesquelles
Les figures 1 et 2 illustrent les modes préférentiels d'exécution en coupe de corps tubulaires selon l'invention selon lesquels les extrémités de l'étiquette sont disposées bout à bout ;
La figure 1 illustre un mode d'exécution de l'invention dans lequel la paroi du corps tubulaire présente un bourrelet à l'aplomb des extrémités de l'étiquette.
La figure 2 illustre un mode d'exécution alternatif dans lequel la paroi du corps tubulaire présente un creux à l'aplomb des extrémités de l'étiquette.
La figure 3 illustre un autre mode d'exécution des corps tubulaires selon lequel les extrémités de l'étiquette se chevauchent.
La figure 4 illustre un autre mode d'exécution des corps tubulaires selon lequel une bande 6 est fixée sur la face interne de l'étiquette et relie lesdites extrémités.
La figure 5 illustre un autre mode d'exécution des corps tubulaires selon lequel une bande 6 est fixée sur la face externe de l'étiquette et relie lesdites extrémités.
Les figures 6 à 8 illustrent des emballages recyclables comprenant un corps tubulaire 1 réalisé selon l'invention.

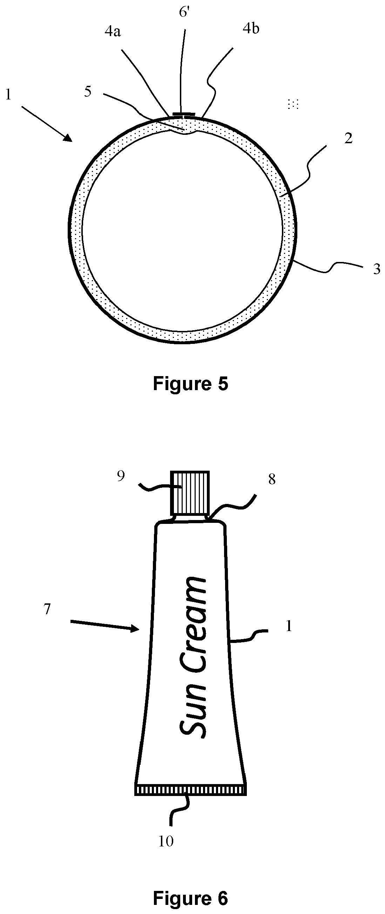

La figure 6 illustre un tube flexible recyclable pour produits liquide ou visqueux tels que des pâtes dentifrices, des produits cosmétiques ou des produits alimentaires.

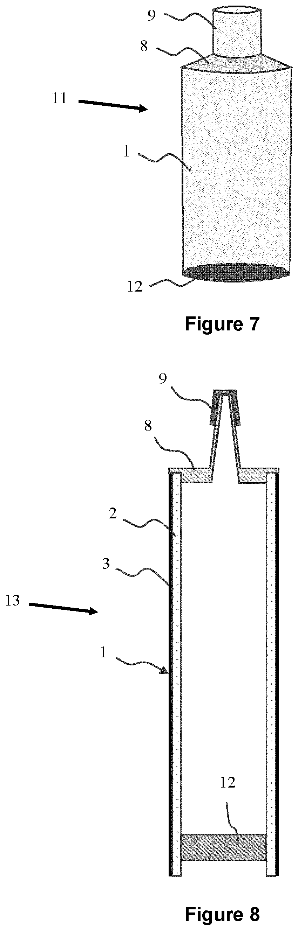

La figure 7 illustre une bouteille ou un flacon recyclable comprenant un corps tubulaire 1 réalisé selon l'invention. Le flacon ou la bouteille permet de délivrer des produis liquides tels que des crèmes ou lotions cosmétiques ou des produits alimentaires tels que des jus.
La figure 8 illustre une cartouche monomatière recyclable comprenant un corps tubulaire 1 réalisé selon l'invention. La cartouche permet de délivrer des produits visqueux tels que des colles ou des mastiques.

L'invention porte notamment sur la partie tubulaire flexible ou rigide de l'emballage confectionnée par extrusion-étiquetage et appelée corps tubulaire dans la présente description.

La réalisation de corps tubulaires recyclables, c'est-à-dire composés majoritairement de résines de même nature (étiquette et couche extrudée), requiert notamment des propriétés spécifiques de l'étiquette. En particulier, il a été déterminé expérimentalement que le coefficient de frottement de la surface externe de l'étiquette dans l'outillage de fabrication du corps tubulaire, doit être inférieur à une valeur critique au-delà de laquelle on observe une rupture de l'étiquette rendant impossible la production du corps tubulaire ou alors une production avec un grand nombre d'emballages défectueux.

Selon l'invention, il a été déterminé de façon expérimentale que la surface externe de l'étiquette devait idéalement présenter un coefficient de friction sur l'inox inférieur à 0.25, et de préférence inférieur à 0,2 et avantageusement inférieur à 0,17 ; ledit coefficient de frottement étant mesuré selon la norme ISO 8295.

Comme l'étiquette se retrouve en surface du corps tubulaire produit, la surface externe dudit corps tubulaire selon l'invention présente par conséquent un coefficient de friction sur l'inox inférieur à 0,25, de préférence inférieur à 0,2 et avantageusement inférieur à 0,17 ; le coefficient de frottement étant mesuré selon la norme ISO 8295, selon les valeurs déterminées expérimentalement.

Comme décrit ci-dessus, selon l'invention, l'étiquette et la couche extrudée sont composées majoritairement de résines de même nature afin de permettre le recyclage de l'emballage en fin de vie.

Selon l'invention, l'étiquette représente entre 2% et 30% de l'épaisseur du corps tubulaire et de préférence entre 5% et 15%. Le bourrelet est utilisé pour compenser la diminution des propriétés au niveau des extrémités de l'étiquette ; le creux est utilisé pour accentuer la diminution des propriétés au niveau des extrémités de l'étiquette.

La figure 1 illustre un corps tubulaire étiqueté 1 comprenant une couche extrudée 2 recouverte par une étiquette 3 dont les extrémités 4a et 4b sont disposée bout à bout. La surface externe de l'étiquette qui est aussi la surface externe du corps tubulaire présente un coefficient de frottement sur inox inférieur à 0,2.

Selon des modes d'exécution, l'étiquette 3 et la couche extrudée 2 sont majoritairement à base de de polyéthylène et préférablement à base de HDPE.

### Exemple 1 :

### Coefficient de friction de l'étiquette sur inox : 0.15

Structure multicouche de l'étiquette 3 :

| | |
|---|---|
| - HDPE | 25 microns (face externe imprimée et vernie) |
| - Liant | 5 microns |
| - EVOH | 10 microns |
| - Liant | 5 microns |
| - HDPE | 25 microns |

Couche extrudée 2

| |
|---|
| - Epaisseur 330 microns |
| - Résine HDPE |

Le taux de HDPE dans le corps tubulaire 1 est de 95%.

Le corps tubulaire 1 est donc facilement recyclable dans la filière HDPE.

Selon un autre exemple d'exécution, l'étiquette comporte des couches de HDPE recyclé.

Selon un autre exemple d'exécution (exemple 2) l'étiquette est en HDPE recyclé, la couche 2 est coextrudée et forme une structure multicouche.

### Exemple 2 :

Etiquette 3

| | |
|---|---|
| - HDPE recyclé | 70 microns |

| Couche extrudée 2 est multicouche (coextrusion) | |
|---|---|
| - HDPE recyclé | 370 microns (couche en contact avec l'étiquette) |
| - Liant | 10 microns |
| - EVOH | 20 microns |
| - Liant | 10 microns |
| - HDPE | 20 microns (face interne) |

Le pourcentage de HDPE recyclé dans le corps tubulaire 1 est de 88%. Le pourcentage de HDPE vierge de 4%. Le corps tubulaire 1 est donc facilement recyclable dans la filière HDPE.

Selon d'autres modes d'exécution, le corps tubulaire comporte une couche barrière dans l'étiquette 3 et une autre dans la couche 2. Ce mode d'exécution est particulièrement avantageux pour emprisonner la couche recyclée entre deux couches barrières situées respectivement proche des surfaces interne et externe du corps tubulaire. Cette configuration permet d'éviter la migration de molécules présentes dans la résine recyclée vers la surface interne du corps tubulaire et vers la surface externe du corps tubulaire. Avantageusement, les couches barrières sont des couches minces comme des couches métallisées ou des couches Siox, ou des couches formées d'autres matières équivalentes.

La figure 1 illustre un bourrelet 5 situé sur la face interne du corps tubulaire 1 et au droit des extrémités 4a et 4b de l'étiquette 3. Le bourrelet vient compenser au moins partiellement une éventuelle discontinuité des propriétés circonférentielle du corps tubulaire au niveau des extrémités de l'étiquette. Dans l'exemple illustré figure 1, l'épaisseur du corps tubulaire est de 400 microns et la surépaisseur créée par le bourrelet est de 40 microns, soit une épaisseur de bourrelet représentant 10% de l'épaisseur totale. Dans d'autres modes d'exécution, l'épaisseur du bourrelet est égale à l'épaisseur de l'étiquette, soit 60 microns, ce qui correspond 15% de l'épaisseur totale. Selon l'invention, l'épaisseur du bourrelet varie entre 1 et 30% de l'épaisseur totale et de préférence entre 5 et 20%

La largeur du bourrelet 5 est comprise entre 0,5 mm et 10 mm et de préférence entre 1 mm et 5 mm. Le bourrelet 5 permet d'améliorer la résistance du corps tubulaire 1 à l'éclatement, notamment en cas de choc.

Selon un autre mode d'exécution de l'invention illustré figure 2, le corps tubulaire 1 présente une sous-épaisseur locale de la couche extrudée 2 au niveau des extrémités 4a et 4b de l'étiquette 3, formant un creux 5'. Le creux 5' a une profondeur comprise entre 1% et 30% de l'épaisseur totale de la paroi du corps tubulaire 1, et de préférence une profondeur comprise entre 5% et 20%. Le creux 5' permet d'augmenter la fragilité du corps tubulaire au niveau des extrémités de l'étiquette pour faciliter l'ouverture du corps tubulaire en fin de vie par déchirure. Cela permet à l'utilisateur de réduire la quantité résiduelle de produit dans l'emballage avant recyclage.

Par exemple, pour une épaisseur de paroi du corps tubulaire de 300 microns, une profondeur du creux 5' de 30 microns représente 10% de l'épaisseur du corps tubulaire. A cette diminution d'épaisseur vient s'ajouter la discontinuité créée par les extrémités de l'étiquette. La diminution locale des propriétés du corps tubulaire permet une ouverture facilitée du corps tubulaire par déchirure.

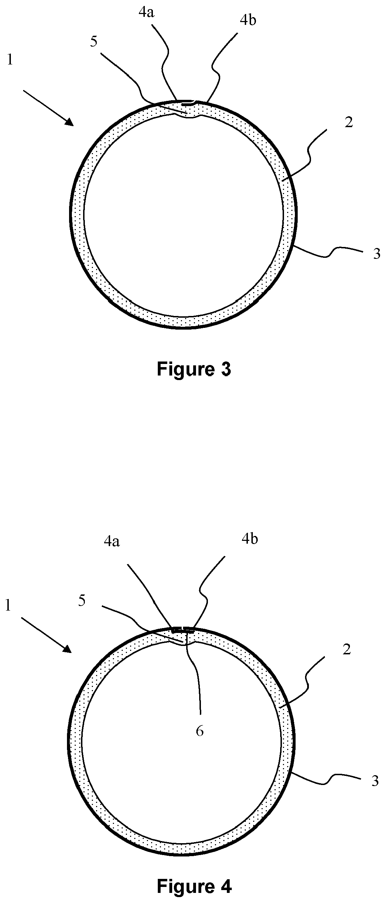

La figure 3 illustre un autre mode d'exécution de l'invention selon lequel, les extrémités 4a et 4b de l'étiquette forment un recouvrement. Dans le mode d'exécution présenté figure 3, la couche extrudée forme un bourrelet 5 venant renforcer la zone de superposition des extrémités 4a, 4b de l'étiquette 3.

Le recouvrement est compris entre 0 et 2mm, préférentiellement entre 0 et 500 microns, et avantageusement entre 0 et 100 microns.

Dans des modes d'exécution, les extrémités 4a et 4b de l'étiquette 3 sont fixées l'une sur l'autre par soudage ou collage. Alternativement, les extrémités 4a, 4b ne sont pas fixées l'une sur l'autre.

Dans un mode d'exécution non illustré, le corps tubulaire 1 présente un creux 5' au niveau de sa paroi au niveau du chevauchement des extrémités 4a, 4b de l'étiquette 3.

La figure 4 illustre un autre mode d'exécution, dans lequel une bande interne 6 relie les extrémités 4a et 4b de l'étiquette. La bande 6 est avantageusement soudée sur la face interne de l'étiquette. Alternativement, la bande 6 est collée ou fixée par d'autres moyens équivalents. La bande 6 est de préférence réalisée avec des résines identiques ou similaires à celles de l'étiquette 3 ou celle de la couche extrudée 2 afin que le corps tubulaire soit facilement recyclable selon les principes de la présente invention.

Dans le mode d'exécution présenté figure 4, la couche extrudée 2 forme un bourrelet 5 venant renforcer la paroi au niveau des extrémités 4a, 4b de l'étiquette 3.

Dans un mode d'exécution non illustré, le corps tubulaire 1 présente un creux 5' au niveau de sa paroi au niveau des extrémités 4a, 4b de l'étiquette 3 (comme illustré dans la figure 2) au lieu du bourrelet 5 de la figure 4 et combine donc un creux 5' et une bande interne 6.

La figure 5 illustre un autre mode d'exécution, dans lequel une bande externe 6' relie les extrémités 4a et 4b de l'étiquette 3. La bande 6' est avantageusement soudée sur la face externe de l'étiquette 3. Alternativement, la bande 6' est collée ou fixée par d'autres moyens équivalents. La bande 7 est de préférence réalisée avec des résines identiques ou similaires à celles de l'étiquette 3 ou celle de la couche extrudée 2 afin que le corps tubulaire 1 soit facilement recyclable selon les principes de la présente invention.

Dans le mode d'exécution présenté figure 5, la couche extrudée 2 forme un bourrelet 5 venant renforcer la paroi au niveau des extrémités 4a, 4b de l'étiquette 3.

Dans un mode d'exécution non illustré, le corps tubulaire 1 présente un creux 5' au niveau de sa paroi au niveau des extrémités 4a, 4b de l'étiquette 3 (comme illustré dans la figure 2) au lieu du bourrelet 5 de la figure 5 et combine donc un creux 5' et une bande externe 6'.

Les figures 6 à 8 illustrent des exemples d'emballages réalisés à partir des corps tubulaires 1 de l'invention. Ces emballages sont facilement recyclables.

La figure 6 illustre un tube flexible 7 destiné à contenir des produits visqueux ou pâteux. Le tube 7 présente un corps tubulaire 1 réalisé par extrusion étiquetage selon les principes et modes d'exécution de l'invention détaillés ci-dessus. Une extrémité du corps tubulaire est reliée à une tête 8 comportant un orifice pour l'extraction du produit contenu dans l'emballage. L'emballage comporte également un système d'ouverture fermeture schématisé par le bouchon 9 qui est appairé à la tête 8. Le bouchon 9 et la tête 8 peuvent former deux objets séparables comme un bouchon vissé sur un goulot tel qu'illustré figure 6. Alternativement, le système de fermeture 9 et la tête 8 sont inséparables. Avantageusement, la tête 8 et le bouchon 9 ne forment qu'un seul objet.

Selon l'invention, le tube flexible 7 formé par le corps tubulaire 1, la tête 8 et le système d'ouverture fermeture 9, est composé majoritairement de résines de même nature afin de permettre le recyclage de l'emballage entier en fin de vie sans devoir effectuer une étape de séparation des parties (corps tubulaire 1, tête 8 et bouchon 9) formant l'emballage 7. Ainsi par exemple, si le corps tubulaire 1 réalisé selon l'invention est à base de HDPE, l'épaule 8 et le bouchon 9 seront de préférence également à base de HDPE.

Ainsi, selon l'invention, le taux de résine de même nature dans le tube flexible complet est au moins de 75%, préférentiellement supérieur à 85% et avantageusement supérieur à 95%.

Selon les principes de l'invention, la surface externe du tube flexible 7 présente un coefficient de friction sur l'inox inférieur à 0.25, et de préférence inférieur à 0,2 et avantageusement inférieur à 0,17 (norme ISO 8295).

La figure 7 illustre un flacon destiné à contenir des produits visqueux ou pâteux. Le flacon 11 est composé d'un corps tubulaire 1 réalisé par extrusion étiquetage selon les principes et modes d'exécution de l'invention. Une extrémité du corps tubulaire 1 est reliée à une tête 8 comportant un orifice pour l'extraction du produit contenu dans l'emballage. Un fond 12 est fixé à la seconde extrémité du corps tubulaire 1. L'emballage 11 comporte également un système d'ouverture fermeture schématisé par le bouchon 9 qui est appairé à la tête 8. Le bouchon 9 et la tête 8 peuvent former deux objets séparables comme un bouchon 9 vissé sur un goulot tel qu'illustré figure 7. Avantageusement, le système de fermeture 9 et la tête 8 sont liés entre eux par un moyen approprié (p.ex. une languette).

Selon les principes et modes d'exécution de l'invention, le flacon 11 comprenant le corps tubulaire 1, la tête 8, le fond 12 et le système d'ouverture fermeture 9 sont composés majoritairement de résines de même nature afin de permettre le recyclage de l'emballage en fin de vie. Ainsi par exemple, si le corps tubulaire 1 réalisé selon l'invention est à base de PP, l'épaule 8, le fond 12 et le bouchon 9 sont également à base de PP.

Ainsi, selon les principes et modes d'exécution de l'invention le taux de résine de même nature dans le flacon est au moins de 75%, préférentiellement supérieur à 85% et avantageusement supérieur à 95%.

Selon les principes et modes d'exécution de l'invention, la surface externe du flacon 11 présente un coefficient de friction sur l'inox inférieur à 0.25, et de préférence inférieur à 0,2 et avantageusement inférieur à 0,17 (norme ISO 8295).

La figure 8 illustre une cartouche 13 destinée à contenir des produits visqueux ou pâteux tels que des colles ou mastiques. La cartouche 13 est composé d'un corps tubulaire 1 réalisé par extrusion étiquetage selon l'invention. Une extrémité du corps tubulaire est reliée à une tête 8 comportant un orifice pour l'extraction du produit contenu dans l'emballage 13. L'orifice est généralement créé avant utilisation par découpe de l'extrémité de la canule. Un fond 12 coulissant obture la seconde extrémité du corps tubulaire et est utilisé pour extraire le produit contenu par son coulissement. L'emballage 13 comporte également un système d'ouverture fermeture schématisé par le bouchon 9 qui est appairé à la tête 8. Le bouchon 9 et la tête 8 peuvent former deux objets séparables comme un bouchon vissé sur un goulot tel qu'illustré figure 8. Avantageusement, le système de fermeture 9 et la tête 8 sont liés entre eux par un moyen approprié (p.ex. une languette).

Selon les principes et modes d'exécution de l'invention, la cartouche 13 comprenant le corps tubulaire 1, la tête 8, le fond 12 et le système d'ouverture fermeture 9 sont composés majoritairement de résines de même nature afin de permettre le recyclage de l'emballage en fin de vie. Ainsi par exemple, si le corps tubulaire 1 réalisé selon l'invention est à base de HDPE, l'épaule 8, le fond 11 et le bouchon 9 sont également à base de HDPE.

Ainsi, selon l'invention le taux de résine de même nature dans la cartouche 13 est au moins de 75%, préférentiellement supérieur à 85% et avantageusement supérieur à 95%.

Selon l'invention, la surface externe de la cartouche 13 présente un coefficient de friction sur l'inox inférieur à 0.25, et de préférence inférieur à 0,2 et avantageusement inférieur à 0,17 (norme ISO 8295).

Les modes d'exécution décrits dans la présente demande le sont à titre d'exemples illustratifs et ne doivent pas être considérés comme limitatifs. D'autres modes d'exécution peuvent faire appel à des moyens ou matières équivalents à ceux décrits. Par exemple, bien que les modes d'exécution illustrés dans les figures 1 à 5 comprennent un bourrelet 5 ou un creux 5', la présente invention et ses principes s'appliquent également à des modes d'exécution de corps tubulaire sans bourrelet ni creux. Les modes d'exécution peuvent également être combinés entre eux en fonction des circonstances, ou des moyens utilisés dans un mode peuvent être utilisés dans un autre mode. Les dimensions sont également données à titre d'exemples ou de valeurs préférées et peuvent varier en fonction des circonstances. De même, les matières indiquées le sont à titre d'exemples illustratifs et d'autre matières équivalentes ou appropriées sont envisageables.

Dans la présente description, il est principalement fait référence à des corps tubulaire utilisées pour former des tubes 7, des flacons 11, des cartouches 13 mais d'autres applications sont bien entendu possibles dans le cadre de la présente invention par exemple pour former d'autres objets.

## Revendications

1. Corps tubulaire (1) obtenu par un procédé d'extrusion et d'étiquetage comprenant les étapes successives suivantes:
(a) formation d'une étiquette (3) partiellement ou totalement tubulaire à partir d'un film composé majoritairement d'une résine,
(b) introduction de l'étiquette (3) dans un élément de calibration,
(c) extrusion d'une couche (2) du côté de la face concave de l'étiquette (3), ladite couche étant composée majoritairement d'une résine, la résine de la couche extrudée (2) et la résine de l'étiquette (3) étant de même nature,
(d) mise en contact de la couche (2) avec la face concave de l'étiquette (3), l'étape (c) étant réalisée dans l'élément de calibration.

2. Corps tubulaire selon la revendication 1, dans lequel la résine est recyclable et/ou recyclée.

3. Corps tubulaire selon la revendication 1 ou 2, dans lequel le taux de résine de même nature est supérieur à 70%.

4. Corps tubulaire selon l'une des revendications 1 à 3, ledit corps tubulaire (1) étant majoritairement à base de polyéthylène, ou de HDPE ou de polypropylène ou de HDPE dont l'indice de fluidité est inférieur à 4.

5. Corps tubulaire selon l'une des revendications précédentes, ledit corps tubulaire (1) étant confectionné au moins en partie à partir de résines recyclées.

6. Corps tubulaire selon l'une des revendications précédentes, dans lequel la surface externe de l'étiquette (3) présente un coefficient de friction sur l'inox inférieur à 0.25.

7. Corps tubulaire selon l'une des revendications précédentes, ledit corps tubulaire (1) comprenant une variation d'épaisseur au niveau de la surface interne et située à l'aplomb de l'extrémité (4a,4b) de l'étiquette (3), ladite variation d'épaisseur formant un bourrelet (5) ou un creux (5').

8. Corps tubulaire selon la revendication précédente, l'épaisseur du bourrelet (5) ou la profondeur du creux (5') étant comprise entre 1% et 30% de l'épaisseur totale.

9. Corps tubulaire selon la revendication 7 ou 8, la largeur du bourrelet (5) ou du creux (5') est comprise entre 0,5mm et 10mm.

10. Corps tubulaire selon l'une des revendications précédentes, dans lequel les extrémités (4a,4b) de l'étiquette (3) sont disposées bout à bout et sont séparées d'un espacement compris entre 0 et 2mm.

11. Corps tubulaire selon l'une des revendications précédentes 1 à 9, dans lequel les extrémités (4a,4b) de l'étiquette se chevauchent et forment un recouvrement compris entre 0 et 2mm.

12. Corps tubulaire selon l'une des revendications précédentes, comprenant une bande interne (6) située entre l'étiquette (3) et la résine extrudée (2) qui relie les extrémités (4a,4b) de l'étiquette (3), la largeur de ladite bande (6) étant comprise entre 2 et 10mm.

13. Corps tubulaire selon l'une des revendications précédentes, comprenant une bande externe (6') située sur la surface externe du corps tubulaire (1) et reliant les extrémités (4a,4b) de l'étiquette (3), la largeur de ladite bande externe (6') étant comprise entre 2 et 10mm.

14. Corps tubulaire selon l'une des revendications précédentes, comprenant au moins une couche barrière à l'oxygène ou/et aux arômes et ou aux substances pouvant migrer dans l'emballage.

15. Corps tubulaire selon la revendication précédente, ladite couche barrière étant située dans l'étiquette (3).

16. Corps tubulaire selon la revendication 14 ou 15, ladite couche barrière étant située dans la couche extrudée (2).

17. Corps tubulaire selon l'une des revendications 14 à 16, l'épaisseur de ladite couche barrière représentant moins de 10% de l'épaisseur totale de l'étiquette, respectivement de la couche extrudée.

18. Emballage comprenant un corps tubulaire selon l'une des revendications précédentes.

19. Emballage selon la revendication précédente, ledit emballage étant un tube (7), ou un flacon (11) ou une cartouche (13).
